(19) Europäisches Patentamt
European Patent Office
Office européen des brevets

(11) EP 2 182 031 B1

(12) EUROPEAN PATENT SPECIFICATION

(45) Date of publication and mention of the grant of the patent:
**05.10.2011 Bulletin 2011/40**

(51) Int Cl.:
***C08L 83/04*** *(2006.01)* ***C08K 3/00*** *(2006.01)*
***C08K 3/22*** *(2006.01)*

(21) Application number: **09252535.1**

(22) Date of filing: **30.10.2009**

(54) **Flame retardant organoplysiloxane compositon**

Flammfeste Organopolysiloxanzusammensetzung

Composition d'organoplysiloxane ignifuge

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **31.10.2008 JP 2008281528**
**01.09.2009 JP 2009201378**

(43) Date of publication of application:
**05.05.2010 Bulletin 2010/18**

(73) Proprietor: **Shin-Etsu Chemical Co., Ltd.**
**Tokyo 100-0004 (JP)**

(72) Inventors:
- **Horikoshi, Jun**
**Gunma-ken (JP)**
- **Kimura, Tsuneo**
**Gunma-ken (JP)**
- **Kameda, Norio**
**Gunma-ken (JP)**

(74) Representative: **Hallybone, Huw George et al**
**Carpmaels & Ransford**
**One Southampton Row**
**London**
**WC1B 5HA (GB)**

(56) References cited:
**JP-A- 2003 246 928 US-A1- 2008 187 763**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

BACKGROUND OF THE INVENTION

1. Field of the Invention

The present invention relates to a flame retardant organopolysiloxane composition with excellent heat resistance.

2. Description of the Prior Art

Conventionally, organopolysiloxane compositions are used in a wide variety of applications, including as adhesives, waterproof and moisture-proof coating materials, electrically insulating sealing materials, and sealing materials for construction purposes.

Furthermore, some organopolysiloxane compositions include a filler for purposes such as improving the flame retardancy of the composition. Aluminum hydroxide is the most widely known additive used for imparting flame retardancy, and employs the heat absorption effect provided by the crystallization water to impart flame retardancy. However, although the decomposition temperature of this crystallization water within aluminum hydroxide is generally stated to be in the vicinity of 200˚C, in reality, the crystallization water begins to be gradually lost at temperatures lower than 200˚C. As a result, a problem arises in that if the organopolysiloxane cured product is used in a high-temperature environment, then water (water vapor) is generated from the aluminum hydroxide that has been added to the organopolysiloxane cured product, which can cause foaming within the organopolysiloxane cured product. The occurrence of foaming within the organopolysiloxane cured product not only impairs the external appearance of the product, but can also cause a deterioration in the waterproof and moisture-proof properties or the electrical insulation properties.

On the other hand, Patent Document 1 discloses an organic peroxide-curable silicone resin composition, which is prepared by adding glass frits and boehmite to a silicone resin and is ideal for use within a fire-resistant electrical cable. However, this composition is not curable at room temperature, meaning it cannot be used as a potting material, sealing material or coating material or the like. Moreover, because the amount of boehmite added is minimal, the flame retardancy is still unsatisfactory.

[Patent Document 1] JP 2003-246928 A

SUMMARY OF THE INVENTION

The present invention has been developed in light of the above circumstances, and has an object of providing a flame retardant organopolysiloxane composition which exhibits excellent heat resistance, is ideal as a potting material or coating material, and which even when exposed to high temperatures, suffers no foaming within the cured product, meaning no deterioration occurs in the waterproof and moisture-proof properties or the electrical insulation properties.

As a result of intensive investigation aimed at achieving the above object, the inventors of the present invention discovered that by adding boehmite, which has a high decomposition temperature for the crystallization water, to an organopolysiloxane composition, a flame retardant organopolysiloxane composition could be obtained that exhibits excellent heat resistance, and suffers no foaming within the cured product even when heated to high temperatures, meaning no deterioration occurs in the waterproof and moisture-proof properties or the electrical insulation properties.

In other words, the present invention provides a flame retardant organopolysiloxane composition comprising:

(A) an organopolysiloxane represented by a general formula (1) :

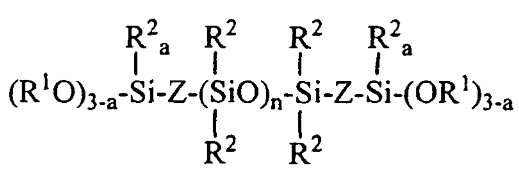

( 1 )

(wherein each $R^1$ independently represents a hydrogen atom or an unsubstituted or substituted monovalent hydrocarbon group, $R^2$ represents identical or different unsubstituted or substituted monovalent hydrocarbon groups, each Z independently represents an oxygen atom or a divalent hydrocarbon group, a represents 0, 1 or 2, and n

represents an integer of 10 or greater): in an amount of 100 parts by mass,

(B) boehmite: in an amount of 5 to 75% by mass of the entire organopolysiloxane composition, and

(C) an organosilicon compound represented by a general formula (2) :

$$R^3_bSiX_{4-b} \qquad (2)$$

(wherein $R^3$ represents an unsubstituted or substituted monovalent hydrocarbon group, X represents identical or different hydrolyzable groups, b represents 0, 1 or 2, and when b=2, the $R^3$ groups may be the same or different), a partial hydrolysis-condensation product thereof, or a combination thereof: in an amount of 1 to 50 parts by mass.

The present invention is able to address the drawbacks associated with conventional flame retardant organopolysiloxane compositions, and in particular, is able to provide a flame retardant organopolysiloxane composition which is ideal as a potting material or coating material, and forms a cured product that exhibits excellent heat resistance and flame retardancy, and suffers no foaming within the cured product even when exposed to high temperatures.

DETAILED DESCRIPTION OF THE PREFERRED EMBODIMENTS

A more detailed description of the present invention is provided below.

The organopolysiloxane composition of the present invention is a condensation-curable organopolysiloxane composition containing boehmite. The curing mechanism is not restricted to one-pot compositions, and multi-pot systems such as two-pot or three-pot systems may be used, although from the viewpoint of workability, a one-pot or two-pot system is preferred.

[Component (A)]

The component (A), which represents the base component of the organopolysiloxane composition of the present invention, is an organopolysiloxane represented by the general formula (1) shown below.

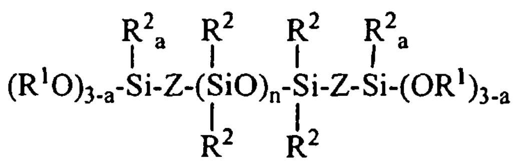

(1)

(wherein each $R^1$ independently represents a hydrogen atom or an unsubstituted or substituted monovalent hydrocarbon group, $R^2$ represents identical or different unsubstituted or substituted monovalent hydrocarbon groups, each Z independently represents an oxygen atom or a divalent hydrocarbon group, a represents 0, 1 or 2, and n represents an integer of 10 or greater.)

The organopolysiloxane of the component (A) may use either a single compound or a combination of two or more different compounds.

Each $R^1$ in the above formula (1) independently represents a hydrogen atom, or an unsubstituted or substituted monovalent hydrocarbon group. Examples of $R^1$ include unsubstituted or substituted monovalent hydrocarbon groups of 1 to 6 carbon atoms, and preferably 1 to 4 carbon atoms, and examples of substituents for the hydrocarbon groups include alkoxy groups such as a methoxy group, ethoxy group, or propoxy group. Specific examples of $R^1$ include alkyl groups such as a methyl group, ethyl group or propyl group, alkenyl groups such as a vinyl group, allyl group or isopropenyl group, and a phenyl group; and those in which these hydrocarbon groups are substituted by at least one alkoxy group. In those cases where a represents either 0 or 1, $R^1$ is preferably an unsubstituted or substituted monovalent hydrocarbon group, is more preferably an unsubstituted alkyl group of 1 to 4 carbon atoms, and is most preferably a methyl group or an ethyl group. In those cases where a represents 2, $R^1$ is most preferably a hydrogen atom.

Each $R^2$ in the above formula (1) preferably represents an unsubstituted or substituted monovalent hydrocarbon group of 1 to 15 carbon atoms, and particularly 1 to 10 carbon atoms. Examples of the substituents include halogens atom such as chlorine, fluorine or bromine atoms, or a cyano group. Specific examples of $R^2$ include alkyl groups such as a methyl group, ethyl group, propyl group, isopropyl group, butyl group, 2-ethylbutyl group or octyl group, cycloalkyl

groups such as a cyclohexyl group or cyclopentyl group, alkenyl groups such as a vinyl group or allyl group, aryl groups such as a phenyl group, tolyl group, xylyl group, naphthyl group, biphenylyl group or phenanthryl group, aralkyl groups such as a benzyl group or phenylethyl group, halogenated alkyl, aryl or cycloalkyl groups such as a chloromethyl group, trichloropropyl group, trifluoropropyl group, bromophenyl group or chlorocyclohexyl group, and cyanoalkyl groups such as a 2-cyanoethyl group, 3-cyanopropyl group or 2-cyanobutyl group. A methyl group, vinyl group, phenyl group or trifluoropropyl group is preferred, and a methyl group is the most desirable.

Each Z in the above formula (1) independently represents an oxygen atom or a divalent hydrocarbon group. Examples of the divalent hydrocarbon group represented by Z include alkylene groups of 1 to 12 carbon atoms, preferably 1 to 10 carbon atoms, and more preferably 1 to 5 carbon atoms. Specific examples include a methylene group, ethylene group or propylene group. Z is preferably an oxygen atom or an ethylene group.

The value of n in the formula (1) is an integer of 10 or greater, and is preferably an integer that yields a viscosity at 25˚C for the organopolysiloxane of not less than 25 $mm^2/s$, more preferably within a range from 100 to 1,000,000 $mm^2/s$, and most preferably from 500 to 200,000 $mm^2/s$.

[Component (B)]

The boehmite of the component (B) is in a state of a powder, and it is added to improve the heat resistance of the flame retardant organopolysiloxane composition of the present invention. The component (B) may use either a single type of boehmite, or a combination of two or more boehmite materials with different average particle sizes and/or particle shapes.

Boehmite is an aluminum oxide hydroxide (alumina hydrate), and is a compound represented by the chemical formula AlOOH or $Al_2O_3 \cdot H_2O$. The decomposition temperature for the crystallization water of boehmite is an extremely high temperature in the vicinity of 500˚C, meaning boehmite exhibits excellent heat resistance. The average particle size of the boehmite is typically not more than 50 μm, is preferably within a range from 0.02 to 20 μm, and is more preferably within a range from 0.5 to 5 μm. If the particle size is too small, then stable production of the composition of the present invention may become difficult, whereas if the particle size is too large, the strength of the resulting cured product may be inadequate, and external appearance problems may arise with respect to a resulting coating when the composition is used as a coating material. The average particle size can be determined as a weight average value (or a median size), using a particle size distribution measurement apparatus that employs a laser diffraction method. Further, there are no particular restrictions on the shape of the boehmite particles, which may be spherical, cubic or plate-like or the like.

The boehmite of the component (B) may use a commercially available material.

The blend amount of the boehmite of the component (B) typically represents 5 to 75% by mass, and preferably 10 to 50% by mass, of the entire flame retardant organopolysiloxane composition. If the amount of the component (B) is too small, then the flame retardancy of the composition tends to be unsatisfactory, whereas if the amount is too large, mixing the component (B) with the other components may become difficult.

[Component (C)]

The component (C) is either an organosilicon compound containing two or more hydrolyzable groups X within each molecule, represented by a general formula (2) :

$$R^3{}_bSiX_{4-b} \qquad (2)$$

(wherein $R^3$ represents an unsubstituted monovalent hydrocarbon group or a substituted monovalent hydrocarbon group substituted with a group other than an amino group or a guanidyl group, that preferably contains from 1 to 10 carbon atoms, and more preferably 1 to 8 carbon atoms, X represents identical or different hydrolyzable groups, b represents 0, 1 or 2, and when b = 2, the two $R^3$ groups may be the same or different),
or a partial hydrolysis-condensation product thereof, or a combination of an organosilicon compound and a partial hydrolysis-condensation product. The component (C) is used as a curing agent within the composition of the present invention. The component (C) may use either a single compound, or a combination of two or more different compounds.

Examples of the monovalent hydrocarbon group represented by $R^3$ in the above formula (2) include alkyl groups, alkenyl groups and aryl groups of 1 to 10 carbon atoms, and preferably 1 to 8 carbon atoms. Examples of substituents for these monovalent hydrocarbon groups include halogen atoms such as chlorine, fluorine and bromine atoms, and a cyano group. Specific examples of $R^3$ include the same groups as those exemplified above for $R^2$, although a methyl group, ethyl group, propyl group, vinyl group or phenyl group is preferred.

Specific examples of the hydrolyzable groups X in the formula (2) include alkoxy groups of 1 to 4 carbon atoms such as a methoxy group, ethoxy group or butoxy group, ketoxime groups such as a dimethyl ketoxime group or methyl ethyl ketoxime group, acyloxy groups such as an acetoxy group, alkenyloxy groups such as an isopropenyloxy group or isobutenyloxy group, amino groups such as an N-butylamino group or N,N-diethylamino group, and amide groups such as an N-methylacetamide group.

The blend amount of the component (C) is typically within a range from 1 to 50 parts by mass, and is preferably from 3 to 20 parts by mass, per 100 parts by mass of the component (A). If this amount is less than 1 part by mass, then achieving adequate cross-linking during curing of the product composition becomes difficult, meaning a cured product with the intended level of rubber-like elasticity may be unobtainable. If the amount exceeds 50 parts by mass, then not only is the product composition prone to a large degree of shrinkage upon curing, but the obtained cured product also tends to exhibit inferior mechanical properties.

[Component (D)]

The crystalline silica or the heavy calcium carbonate used as the component (D) is in a state of a powder, and has the effects of improving the flame retardancy of the composition of the present invention while also imparting the composition with favorable fluidity. In those cases where the composition of the present invention is used as a potting material, addition of the component (D) to the composition is preferable, and the particle size of the component (D) is preferably larger than that of the component (A). The particle size of the component (D) is preferably within a range from 0.1 to 50 $\mu$m, and is more preferably from 1 to 30 $\mu$m. If the particle size is too small, then the fluidity of a composition obtained is inadequate for use as a potting material, whereas if the particle size is too large, the strength of the cured product of a resulting composition tends to be unsatisfactory.

The component (D) is either a crystalline silica or a heavy calcium carbonate, but is preferably a crystalline silica. The component (D) may be used singly, or a combination of two or more materials with different average particle sizes and/or particle shapes.

The crystalline silica may also be a powder that has been subjected to a surface treatment using an organosilicon compound such as an organoalkoxysilane, organosilazane, silanol group- or alkoxy group-containing organopolysiloxane.

The heavy calcium carbonate may have been subjected to a surface treatment using a fatty acid or a paraffin material.

The component (D) is an optional component because the component (D) performs an auxiliary role to that of the component (B). In the cases where the component (D) is added, a typical amount thereof is within a range from 5 to 50% by mass, and an amount from 10 to 30% by mass is preferred. If the amount of the component (D) is too small, then the improvement in the fluidity of the composition may not be sufficient, whereas if the amount is too large, then kneading of the composition may become difficult.

[Component (E): Curing catalyst]

The silicone rubber composition of the present invention is a condensation-curable composition, and if required, a curing catalyst may be used as a component (E) in this type of condensation-curable silicone rubber composition. Examples of this curing catalyst include alkyl tin ester compounds such as dibutyltin diacetate, dibutyltin dilaurate and dibutyltin dioctoate; titanate esters and titanium chelate compounds such as tetraisopropoxy titanium, tetra-n-butoxy titanium, tetrakis(2-ethylhexoxy) titanium, dipropoxybis(acetylacetonato) titanium, and titanium isopropoxyoctylene glycol; organometal compounds containing zing, iron, cobalt, manganese or aluminum, such as zinc naphthenate, zinc stearate, zinc 2-ethyloctoate, iron 2-ethylhexoate, cobalt 2-ethylhexoate, manganese 2-ethylhexoate, cobalt naphthenate, and alkoxy aluminum compounds; aminoalkyl alkoxysilanes such as 3-aminopropyltriethoxysilane and N-$\beta$-(aminoethyl)-$\gamma$-aminopropyltrimethoxysilane; amine compounds and salts thereof such as hexylamine and dodecylamine phosphate; quaternary ammonium salts such as benzyltriethylammonium acetate; lower fatty acid salts of alkali metals such as potassium acetate, sodium acetate and lithium oxalate; dialkylhydroxylamines such as dimethylhydroxylamine and diethylhydroxylamine; and guanidyl group-containing silanes and siloxanes such as tetramethylguanidylpropyltrimethoxysilane, tetramethylguanidylpropylmethyldimethoxysilane and 1,1,3,3-tetramethyl-2-[3-(trimethoxysilily)propyl] guanidine. These curing catalysts may be used either individually, or in combinations of two or more different catalysts.

The blend amount of the curing catalyst is typically within a range from 0 to 10 parts by mass, and is preferably from 0.01 to 5 parts by mass, per 100 parts by mass of the component (A).

[Component (F): Fumed silica]

In those cases where the cured product of the flame retardant organopolysiloxane composition of the present

invention requires a particularly high degree of strength, a fumed silica (F) is preferably added to the composition. The blend amount of the fumed silica is typically within a range from 1 to 50 parts by mass, and preferably from 3 to 40 parts by mass, per 100 parts by mass of the component (A). The surface of the fumed silica may be either untreated, or treated with a silane coupling agent or organopolysiloxane or the like.

[Other fillers]

In addition to the components (A), (D) and (F) described above, the flame retardant organopolysiloxane composition of the present invention may also contain a variety of other fillers if required, provided the inclusion of these other fillers does not impair the effects of the present invention. Examples of these other fillers include fine silica powders, silica aerogel and diatomaceous earth; metal oxides such as iron oxide, zinc oxide, titanium oxide and aluminum oxide; metal nitrides such as boron nitride and aluminum nitride; metal carbonates such as calcium carbonate other than heavy calcium carbonate, magnesium carbonate and zinc carbonate; asbestos, glass wools, carbon blacks, fine mica powders and fused silica powders; and synthetic resin powders such as polystyrene, polyvinyl chloride and polypropylene. The blend amount of these fillers is arbitrary, provided the effects of the present invention are not impaired, but is typically within a range from 0 to 500 parts by mass per 100 parts by mass of the component (A). When these types of fillers are used, the filler is preferably subjected to a preliminary drying treatment to remove any moisture prior to use.

The surface of these fillers may be either untreated, or treated with a silane coupling agent, organopolysiloxane or fatty acid or the like.

[Other additives]

Other optional additives may also be added to the organopolysiloxane composition of the present invention, including pigments, dyes, age resistors, antioxidants and antistatic agents; as well as other flame retardants such as platinum compounds, antimony oxide and chlorinated paraffin.

Moreover, polyethers that function as thixotropy improvers; fungicides; antibacterial agents; and adhesion assistants, including aminosilanes such as γ-aminopropyltriethoxysilane and 3-(2-aminoethylamino)propyltrimethoxysilane, and epoxysilanes such as γ-glycidoxypropyltrimethoxysilane and β-(3,4-epoxycyclohexyl)ethyltrimethoxysilane, may also be added to the composition. The blend amounts of these additives are arbitrary, provided the effects of the present invention are not impaired.

The organopolysiloxane composition of the present invention can be prepared by uniformly mixing the components (A) to (C), together with a curing catalyst and any of the other fillers or additives described above. The mixing is preferably conducted in a dry atmosphere (that is essentially free of moisture).

By applying or molding the organopolysiloxane composition of the present invention at room temperature in the open atmosphere, the composition cures under the effect of the moisture in the atmosphere. The curing conditions may be the same as those used for commercially available room temperature-curable organopolysiloxane compositions.

EXAMPLES

A more detailed description of the present invention is provided below based on a series of examples and comparative examples, although the present invention is in no way limited by the examples presented below. In the examples, "parts" refers to "parts by mass", and viscosity values represent values measured at 25˚C.

[Example 1]

100 parts of a dimethylpolysiloxane with both molecular chain terminals blocked with hydroxyl groups and having a viscosity of 700 $mm^2/s$ was mixed, in an anhydrous atmosphere, with 10 parts of phenyltri(isopropenyloxy) silane, 1 part of 3-aminopropyltriethoxysilane, 0.8 parts of 1,1,3,3-tetramethyl-2-[3-(trimethoxysilyl)propyl]guanidine, and 300 parts of boehmite (Boehmite C20, manufactured by Taimei Chemicals Co., Ltd., average particle size: 1.9 μm). The resulting mixture was then subjected to a defoaming/mixing treatment to complete preparation of a composition. Further, a cured product of the organopolysiloxane composition was prepared by curing a sample of the composition for 7 days in an atmosphere of 23˚C and 50% RH.

[Example 2]

5 parts of fumed silica was added to 50 parts of a dimethylpolysiloxane with both molecular chain terminals blocked with hydroxyl groups and having a viscosity of 700 $mm^2/s$, and the resulting mixture was heated to 150˚C and mixed for 2 hours under reduced pressure. Following cooling, the fumed silica was dispersed in the dimethylpolysiloxane

using a three-roll mill. To the resulting mixture were added and mixed, in an anhydrous atmosphere, 50 parts of the dimethylpolysiloxane with both molecular chain terminals blocked with hydroxyl groups and having a viscosity of 700 $mm^2/s$, 70 parts of boehmite (Boehmite C20, manufactured by Taimei Chemicals Co., Ltd., average particle size: 1.9 μm), an alcohol solution of chloroplatinic acid as a flame retardancy improver, in an amount sufficient to provide 20 ppm of platinum relative to the total mass of the mixture, 8 parts of phenyltri(isopropenyloxy)silane, 1 part of 3-aminopropyltriethoxysilane, and 0.8 parts of 1,1,3,3-tetramethyl-2-[3-(trimethoxysilyl)propyl]guanidine. The resulting mixture was then subjected to a defoaming/mixing treatment to complete preparation of a composition. Further, a cured product of the organopolysiloxane composition was prepared by curing a sample of the composition for 7 days in an atmosphere of 23˚C and 50% RH.

[Example 3]

5 parts of fumed silica was added to 50 parts of a dimethylpolysiloxane with both molecular chain terminals blocked with hydroxyl groups and having a viscosity of 700 $mm^2/s$, and the resulting mixture was heated to 150˚C and mixed for 2 hours under reduced pressure. Following cooling, the fumed silica was dispersed in the dimethylpolysiloxane using a three-roll mill. To the resulting mixture were added and mixed, in an anhydrous atmosphere, 50 parts of the dimethylpolysiloxane with both molecular chain terminals blocked with hydroxyl groups and having a viscosity of 700 $mm^2/s$, 70 parts of boehmite (Boehmite C20, manufactured by Taimei Chemicals Co., Ltd., average particle size: 1.9 μm), an alcohol solution of chloroplatinic acid as a flame retardancy improver, in an amount sufficient to provide 20 ppm of platinum relative to the total mass of the mixture, and 5 parts of phenyltri(isopropenyloxy)silane, and the resulting mixture was then subjected to a defoaming/mixing treatment to complete preparation of a composition (the base component).

To 70 parts of a dimethylpolysiloxane with both molecular chain terminals blocked with methyl groups and having a viscosity of 300 $mm^2/s$ were added and mixed, in an anhydrous atmosphere, 20 parts of 3-aminopropyltriethoxysilane and 10 parts of 1,1,3,3-tetramethyl-2-[3-(trimethoxysilyl)propyl]guanidine, and the resulting mixture was then subjected to a defoaming/mixing treatment to complete preparation of a composition (a curing agent). Further, a cured product of the organopolysiloxane composition was prepared by mixing the base component and the curing agent in a mixing ratio (mass ratio) of 100:10, and then curing the mixture for 3 days in an atmosphere of 23˚C and 50% RH.

[Example 4]

100 parts of a dimethylpolysiloxane with both molecular chain terminals blocked with hydroxyl groups and having a viscosity of 700 $mm^2/s$ was mixed, in an anhydrous atmosphere, with 10 parts ofphenyltri(isopropenyloxy) silane, 1 part of 3-aminopropyltriethoxysilane, 0.8 parts of 1,1,3,3-tetramethyl-2-[3-(trimethoxysilyl)propyl]guanidine, 10 parts of boehmite (Boehmite C20, manufactured by Taimei Chemicals Co., Ltd., average particle size: 1.9 μm), and an alcohol solution of chloroplatinic acid as a flame retardancy improver, in an amount sufficient to provide 20 ppm of platinum relative to the total mass of the mixture. The resulting mixture was then subjected to a defoaming/mixing treatment to complete preparation of a composition. Further, a cured product of the organopolysiloxane composition was prepared by curing a sample of the composition for 7 days in an atmosphere of 23˚C and 50% RH.

[Example 5]

5 parts of fumed silica was added to 50 parts of a dimethylpolysiloxane with both molecular chain terminals blocked with hydroxyl groups and having a viscosity of 700 $mm^2/s$, and the resulting mixture was heated to 150˚C and mixed for 2 hours under reduced pressure. Following cooling, the fumed silica was dispersed in the dimethylpolysiloxane using a three-roll mill. To the resulting mixture were added and mixed, in an anhydrous atmosphere, 50 parts of the dimethylpolysiloxane with both molecular chain terminals blocked with hydroxyl groups and having a viscosity of 700 $mm^2/s$, 35 parts of boehmite (Boehmite C20, manufactured by Taimei Chemicals Co., Ltd., average particle size: 1.9 μm), 35 parts of a crystalline silica (Crystalite VXS-2, manufactured by Tatsumori Ltd., average particle size: 5.0 μm), an alcohol solution of chloroplatinic acid as a flame retardancy improver, in an amount sufficient to provide 20 ppm of platinum relative to the total mass of the mixture, 8 parts of phenyltri(isopropenyloxy)silane, 1 part of 3-aminopropyltriethoxysilane, and 0.8 parts of 1,1,3,3-tetramethyl-2-[3-(trimethoxysilyl)propyl]guanidine. The resulting mixture was then subjected to a defoaming/mixing treatment to complete preparation of a composition. Further, a cured product of the organopolysiloxane composition was prepared by curing a sample of the composition for 7 days in an atmosphere of 23˚C and 50% RH.

[Example 6]

5 parts of fumed silica was added to 50 parts of a dimethylpolysiloxane with both molecular chain terminals blocked with hydroxyl groups and having a viscosity of 700 $mm^2/s$, and the resulting mixture was heated to 150˚C and mixed for 2 hours under reduced pressure. Following cooling, the fumed silica was dispersed in the dimethylpolysiloxane using a three-roll mill. To the resulting mixture were added and mixed, in an anhydrous atmosphere, 50 parts of the dimethylpolysiloxane with both molecular chain terminals blocked with hydroxyl groups and having a viscosity of 700 $mm^2/s$, 35 parts of boehmite (Boehmite C20, manufactured by Taimei Chemicals Co., Ltd., average particle size: 1.9 μm), 35 parts of calcium carbonate (Super S, manufactured by Maruo Calcium Co., Ltd., average particle size: 6.3 μm), an alcohol solution of chloroplatinic acid as a flame retardancy improver, in an amount sufficient to provide 20 ppm of platinum relative to the total mass of the mixture, 8 parts of phenyltri(isopropenyloxy)silane, 1 part of 3-aminopropyltriethoxysilane, and 0.8 parts of 1,1,3,3-tetramethyl-2-[3-(trimethoxysilyl)propyl]guanidine. The resulting mixture was then subjected to a defoaming/mixing treatment to complete preparation of a composition. Further, a cured product of the organopolysiloxane composition was prepared by curing a sample of the composition for 7 days in an atmosphere of 23˚C and 50% RH.

[Comparative example 1 ]

100 parts of a dimethylpolysiloxane with both molecular chain terminals blocked with hydroxyl groups and having a viscosity of 700 $mm^2/s$ was mixed, in an anhydrous atmosphere, with 10 parts of phenyltri(isopropenyloxy) silane, 1 part of 3-aminopropyltriethoxysilane, 0.8 parts of 1,1,3,3-tetramethyl-2-[3-(trimethoxysilyl)propyl]guanidine, and 300 parts of aluminum hydroxide (H320I, manufactured by Showa Denko K.K.). The resulting mixture was then subjected to a defoaming/mixing treatment to complete preparation of a composition. Further, a cured product of the organopolysiloxane composition was prepared by curing a sample of the composition for 7 days in an atmosphere of 23˚C and 50% RH.

[Comparative example 2]

100 parts of a dimethylpolysiloxane with both molecular chain terminals blocked with hydroxyl groups and having a viscosity of 700 $mm^2/s$ was mixed, in an anhydrous atmosphere, with 10 parts of phenyltri(isopropenyloxy) silane, 1 part of 3-aminopropyltriethoxysilane, 0.8 parts of 1,1,3,3-tetramethyl-2-[3-(trimethoxysilyl)propyl]guanidine, 5 parts of boehmite (Boehmite C20, manufactured by Taimei Chemicals Co., Ltd., average particle size: 1.9 μm), and an alcohol solution of chloroplatinic acid as a flame retardancy improver, in an amount sufficient to provide 20 ppm of platinum relative to the total mass of the mixture. The resulting mixture was then subjected to a defoaming/mixing treatment to complete preparation of a composition. Further, a cured product of the organopolysiloxane composition was prepared by curing a sample of the composition for 7 days in an atmosphere of 23˚C and 50% RH.

[Comparative example 3]

100 parts of a dimethylpolysiloxane with both molecular chain terminals blocked with hydroxyl groups and having a viscosity of 700 $mm^2/s$ was mixed, in an anhydrous atmosphere, with 10 parts of phenyltri(isopropenyloxy) silane, 1 part of 3-aminopropyltriethoxysilane, 0.8 parts of 1,1,3,3-tetramethyl-2-[3-(trimethoxysilyl)propyl]guanidine, and 400 parts of boehmite (Boehmite C20, manufactured by Taimei Chemicals Co., Ltd., average particle size: 1.9 μm), but the composition was overly hard, and satisfactory kneading was impossible.

The cured products obtained by curing each of the compositions prepared in the aforementioned examples 1 to 6 and comparative examples 1 to 3 were each evaluated for flame retardancy (in accordance with UL-94, using a sample of thickness 2 mm), heat resistance upon heating at 200˚C for 2 hours. Fluidity of the compositions was evaluated by dropping each thereof onto a glass plate. The fluidity was evaluated by dropping a composition onto a surface of a glass plate of dimensions 5 cm x 5 cm, and in those cases where the composition spread to cover the entire plate, the fluidity was evaluated as good and was recorded using the symbol "O", in those cases where the composition spread to some extent but did not cover the entire plate, the fluidity was evaluated as insufficient and was recorded using the symbol "Δ", and in those cases where the composition did not spread at all, the fluidity was evaluated as poor and was recorded using the symbol "X". The results are shown in Tables 1 and 2.

[Table 1]

| | Example 1 | Example 2 | Example 3 | Example 4 | Example 5 | Example 6 |
|---|---|---|---|---|---|---|
| Flame | Equivalent to | Equivalent to | Equivalent to | Equivalent to | Equivalent to | Equivalent to |

(continued)

| | Example 1 | Example 2 | Example 3 | Example 4 | Example 5 | Example 6 |
|---|---|---|---|---|---|---|
| retardancy | V-0 standard | V-0 standard | V-0 standard | V-0 standard | V-0 standard | V-0 standard |
| Heat resistance | Good (no foaming) | Good (no foaming) | Good (no foaming) | Good (no foaming) | Good (no foaming) | Good (no foaming) |
| Fluidity | X | Δ | Δ | Δ | ○ | ○ |

[Table 2]

| | Comparative example 1 | Comparative example 2 | Comparative example 3 |
|---|---|---|---|
| Flame retardancy | Equivalent to V-0 standard | Equivalent to HB standard | Kneading impossible |
| Heat resistance | Poor (foaming) | Good (no foaming) | Kneading impossible |
| Fluidity | X | O | Kneading impossible |

From the above results it is clear that the cured products of the compositions of the present invention exhibited favorable flame retardancy and heat resistance, whereas the composition of comparative example 1 that contained no boehmite, and the compositions of comparative examples 2 and 3 that contained boehmite amounts outside of the range specified in the present invention were either unable to generate a cured product that provided both flame retardancy and heat resistance, or were unable to be mixed satisfactorily.

## Claims

**1.** A flame retardant organopolysiloxane composition comprising:

(A) an organopolysiloxane represented by a general formula (1):

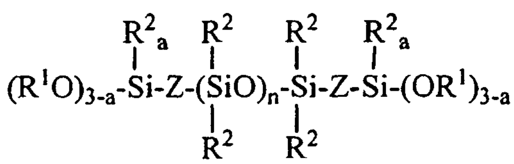

(1)

wherein each $R^1$ independently represents a hydrogen atom or an unsubstituted or substituted monovalent hydrocarbon group, $R^2$ represents identical or different unsubstituted or substituted monovalent hydrocarbon groups, each Z independently represents an oxygen atom or a divalent hydrocarbon group, a represents 0, 1 or 2, and n represents an integer of 10 or greater: in an amount of 100 parts by mass,
(B) boehmite: in an amount of 5 to 75% by mass of a total mass of the organopolysiloxane composition, and
(C) an organosilicon compound represented by a general formula (2):

$$R^3_bSiX_{4-b} \qquad (2)$$

wherein $R^3$ represents an unsubstituted or substituted monovalent hydrocarbon group, X represents identical or different hydrolyzable groups, b represents 0, 1 or 2, and when b=2, the two $R^3$ groups may be the same or different,
or a partial hydrolysis-condensation product thereof, or a combination thereof in an amount of 1 to 50 parts by mass.

2. The composition according to claim 1, wherein an average particle size of component (B) is within a range from 0.01 to 50 μm.

3. The composition according to claim 1 or 2, further comprising:

(D) a crystalline silica or a heavy calcium carbonate.

4. The composition according to any one of claims 1 to 3, further comprising:

(E) a curing catalyst.

5. The composition according to any one of claims 1 to 4, further comprising:

(F) a fumed silica.

6. Use of a composition according to any one of claims 1 to 5 as a potting material.

7. A potting material comprising a composition according to any one of claims 1 to 5.

**Patentansprüche**

1. Flammfeste Organopolysiloxanzusammensetzung, umfassend:

(A) ein Organopolysiloxan der allgemeinen Formel (I) :

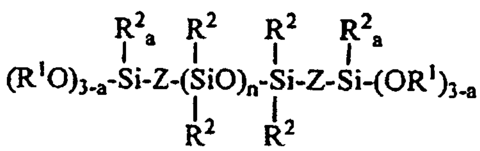

(1)

worin $R^1$ jeweils unabhängig voneinander für ein Wasserstoffatom oder eine unsubstituierte oder substituierte einwertige Kohlenwasserstoffgruppe steht, $R^2$ für gleiche oder verschiedene unsubstituierte oder substituierte einwertige Kohlenwasserstoffgruppen steht, Z jeweils unabhängig voneinander für ein Sauerstoffatom oder eine zweiwertige Kohlenwasserstoffgruppe steht, a für 0, 1 oder 2 steht und n für eine ganze Zahl mit einem Wert von 10 oder mehr steht: in einer Menge von 100 Massenteilen,
(B) Böhmit: in einer Menge von 5 bis 75 Massen-%, bezogen auf die Gesamtmasse der Organopolysiloxanzusammensetzung, und
(C) eine Organosiliciumverbindung der allgemeinen Formel (2):

$$R^3{}_bSiX_{4-b} \quad (2)$$

worin $R^3$ für eine unsubstituierte oder substituierte einwertige Kohlenwasserstoffgruppe steht, X für gleiche oder verschiedene hydrolysierbare Gruppen steht, b für 0, 1 oder 2 steht und dann, wenn b = 2, die beiden Gruppen $R^3$ gleich oder verschieden sein können,
oder ein Partialhydrolyseprodukt davon oder eine Kombination davon: in einer Menge von 1 bis 50 Massenteilen.

2. Zusammensetzung nach Anspruch 1, wobei die mittlere Teilchengröße der Komponente (B) im Bereich von 0,01 bis 50 μm liegt.

3. Zusammensetzung nach Anspruch 1 oder 2, ferner umfassend:

(D) ein kristallines Siliciumdioxid oder ein schweres Calciumcarbonat.

**4.** Zusammensetzung nach einem der Ansprüche 1 bis 3, ferner umfassend:

(E) einen Härtungskatalysator.

**5.** Zusammensetzung nach einem der Ansprüche 1 bis 4, ferner umfassend:

(F) ein pyrogenes Siliciumdioxid.

**6.** Verwendung einer Zusammensetzung nach einem der Ansprüche 1 bis 5 als Vergußmaterial.

**7.** Vergußmaterial, umfassend eine Zusammensetzung nach einem der Ansprüche 1 bis 5.

**Revendications**

**1.** Composition d'organopolysiloxane ignifuge comprenant :

(A) un organopolysiloxane représenté par une formule générale (1) :

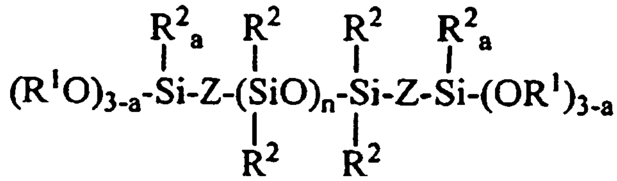

(1)

dans laquelle
chaque $R^1$ représente indépendamment un atome d'hydrogène ou un groupe hydrocarboné monovalent non substitué ou substitué,
les $R^2$ représentent des groupes hydrocarbonés monovalents non substitués ou substitués identiques ou différents,
chaque Z représente indépendamment un atome d'oxygène ou un groupe hydrocarboné divalent,
a représente 0, 1 ou 2 et
n représente un entier supérieur ou égal à 10 : en une quantité de 100 parties en masse,
(B) de la boehmite : en une quantité de 5 à 75 % en masse par rapport à une masse totale de la composition d'organopolysiloxane et
(C) un composé d'organosilicium représenté par une formule générale (2) :

$$R^3_bSiX_{4-b} \qquad (2)$$

dans laquelle
$R^3$ représente un groupe hydrocarboné monovalent non substitué ou substitué,
les X représentent des groupes hydrolysables identiques ou différents,
b représente 0, 1 ou 2 et
lorsque b = 2, les deux groupes $R^3$ peuvent être identiques ou différents,
ou un produit de condensation par hydrolyse partielle de celui-ci ou une combinaison de ceux-ci : en une quantité de 1 à 50 parties en masse.

**2.** Composition selon la revendication 1, dans laquelle une taille moyenne des particules de composant (B) est dans une plage de 0,01 à 50 µm.

**3.** Composition selon la revendication 1 ou 2, comprenant en outre :

(D) une silice cristalline ou un carbonate de calcium lourd.

**4.** Composition selon l'une quelconque des revendications 1 à 3, comprenant en outre :

(E) un catalyseur de durcissement.

**5.** Composition selon l'une quelconque des revendications 1 à 4, comprenant en outre :

(F) une silice pyrogénée.

**6.** Utilisation d'une composition selon l'une quelconque des revendications 1 à 5 comme matière d'empotage.

**7.** Matière d'empotage comprenant une composition selon l'une quelconque des revendications 1 à 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003246928 A